# EUROPÄISCHE PATENTSCHRIFT

(11) **EP 3 600 746 B1**
(45) Veröffentlichungstag und Bekanntmachung des Hinweises auf die Patenterteilung: **20.09.2023**
(21) Anmeldenummer: 18713833.4
(22) Anmeldetag: 20.03.2018
(51) Int. Cl.: B23K 9/025, B23K 33/00, B23K 26/262, B23K 101/00, B23K 101/04

(54) **VERFAHREN ZUM HERSTELLEN EINES TRÄGERBAUTEILS FÜR EINE FAHRZEUGANWENDUNG**
METHOD FOR PRODUCING A CARRIER COMPONENT FOR A VEHICLE APPLICATION
PROCÉDÉ SERVANT À FABRIQUER UN COMPOSANT POUR UNE APPLICATION DE VÉHICULE

(30) Priorität: 21.03.2017 DE 102017106001
(43) Veröffentlichungstag der Anmeldung: 05.02.2020
(73) Patentinhaber: Kirchhoff Automotive Deutschland GmbH, 57439 Attendorn (DE)
(72) Erfinder: TÖLLER, Marco, 51107 Köln (DE); BAUER, Michael, 58840 Plettenberg (DE); DAHMEN, Christian, 57462 Olpe (DE); BARTZIK, Josef, 58644 Iserlohn (DE)
(74) Vertreter: Haverkamp Patentanwälte PartG mbB
(86) Internationale Anmeldenummer: PCT/EP2018/056936
(87) Internationale Veröffentlichungsnummer: WO 2018/172311

(56) Entgegenhaltungen:
- EP-A1- 2 363 214
- WO-A1-01/76930
- US-A1- 2013 337 285

## Beschreibung

Die Erfindung betrifft ein Verfahren gemäß dem Oberbegriff des Anspruchs 1 (siehe, zum Beispiel, WO 01/76930A1) zum Herstellen eines aus zwei im Querschnitt U-förmigen Halbschalen aufgebauten Trägerbauteils für eine Fahrzeuganwendung. Trägerbauteile bei Fahrzeuganwendungen werden, wenn diese aus Stahlblech hergestellt sind, vielfach in Schalenbauweise ausgeführt. Derartige Trägerbauteile können Holme oder Träger unterschiedlicher Anwendung in Kastenbauweise sein. Eingesetzt werden derartige Trägerbauteile in Form von Kasten- oder Rundprofilen oder auch mit einer differenzierten Umrissgeometrie, wenn ein solches Trägerbauteil beispielsweise als Teil eines Hilfsrahmens vorgesehen ist. Die zur Ausbildung eines solchen Trägerbauteils eingesetzten Halbschalen weisen eine U-förmige Querschnittsgeometrie auf. Zwei Halbschalen werden zur Ausbildung des Trägerbauteils im Bereich ihrer die Schenkel der Querschnittsform bildenden Endabschnitte miteinander durch Fügen, typischerweise Schweißen verbunden. Die freien Endflächen der Schenkel bilden jeweils einen Stoß.

In zahlreichen Anwendungsfällen sind die Endabschnitte der Schenkel zur Ausbildung eines Fügeflansches nach außen abgekantet. Miteinander zu verbindende Halbschalen grenzen mit ihren Fügeflanschen aneinander und werden über diese miteinander verschweißt. Gemäß einer anderen Ausgestaltung zum Herstellen eines solchen Trägerbauteils werden zwei Halbschalen in einer Überlappverbindung gehalten, bei der die Endabschnitte der parallelen Schenkel der einen Halbschale in die U-förmige Aufnahme der anderen Halbschale eingreifen. Diese liegen sodann mit ihrer nach au-ßen weisenden Seite an der Innenseite der Schenkel der anderen Halbschale an. Zum Herstellen der Fügeverbindung zwischen diesen beiden Halbschalen wird auf dem dann außenliegenden Stoß der die Endabschnitte der anderen Halbschale aufnehmenden Halbschale geschweißt.

Nachteilig ist bei einer solchen Überlappverbindung die Materialdopplung in dem Bereich des Überlappens, was zu einem erhöhten Gewicht des Trägerbauteils führt. Mitunter wird bei diesem Konzept auch als nachteilig angesehen, dass die Breite der Halbschalen unterschiedlich ist, wodurch der zur Verfügung stehende Bauraum nicht optimal ausgenutzt werden kann. Insbesondere geht mit der herkömmlichen Ausgestaltung ein geringerer Querschnitt und damit eine geringere Steifigkeit einher, als dies der vorhandene Bauraum eigentlich zulassen würde. Gemäß einer weiteren Ausgestaltung, ein solches Trägerbauteil herzustellen, werden zwei bezüglich ihrer Stoßspannweite - dem Außenwandabstand der einander gegenüberliegenden Schenkel im Bereich der Stöße - identische Halbschalen mit ihren Stößen aneinandergrenzend gehalten, um beide Halbschalen dann durch eine Verschweißung im I-Stoß miteinander zu verbinden.

Zwar ist das Gewicht eines solchermaßen hergestellten Trägerbauteils auf Grund der nicht vorhandenen Materialdopplung geringer. Nachteilig ist jedoch, dass das Fügen der Halbschalen zweistufig vorgenommen werden muss, da ein seitliches Schweißen oder ein Überkopfschweißen zum Erstellen der gewünschten Stoßfügeverbindung hierbei nicht zielführend ist. Daher sind bei diesem Konzept herstellungsbedingte Nachteile in Kauf zu nehmen, die die Prozessdauer und das Werkstückhandling betreffen, da der Zusammenbau zwischen den beiden Schweißnähten, die in Wannenlage ausgeführt werden, gewendet werden muss. Zudem muss bei diesem Konzept auf Grund des einseitigen Schweißens ein Verdrehen des Bauteils ("Drall") in Erstreckungsrichtung der Schweißnaht in Kauf genommen werden. Dieses erfordert mitunter einen zusätzlichen Prozessschritt, wie beispielsweise ein nachträgliches Richten oder eine aufwendige Anpassung der Handlingsapparatur oder des Schweißprozesses, wie beispielsweise das gegenüberliegende und zeitversetzte Anbringen von gesteppten Schweißnähten oder ein vorgeschaltetes Heften.

Zum beidseitigen Längsnahtschweißen von zwei Halbschalen zum Ausbilden eines Kranauslegerprofils ist aus DE 10 2007 044 570 A1 bekannt, die obere Halbschale mit einer geringeren Blechstärke und die untere Halbschale mit einer größeren Blechstärke auszubilden. Die Innenwandspannweite der beiden Profilhalbschalen ist gleich, damit durch Aufbringen einer Radialkraft auf die fluchtende Anordnung der Innenwände der beiden Profilhalbschalen die Stöße zueinander ausgerichtet werden können. Die unterschiedliche Blechstärke dient dem Zweck, dass der Stoß der unteren Halbschale gegenüber dem außenseitigen Abschluss der oberen Halbschale vorsteht. Dieser Vorstand ermöglicht in der PC-Position ein stoßseitiges Fügen der beiden Halbschalen ohne zusätzliche Schweißbadsicherung. Zum Fügen ist ein nicht unerheblicher apparativer Aufbau erforderlich. Zunächst werden die Halbschalen mit ihren Stößen zueinander positioniert und geheftet. Zu diesem Zweck werden die Innenwände der Halbschalen im Bereich der Stöße abgestützt. Ein einstufiges Schweißen ist bei diesem vorbekannten Konzept nicht möglich. Die Blechstärke beträgt bei diesem Stand der Technik 8 mm. Der durch einen Absatz des Stoßes der unteren Halbschale gegenüber demjenigen der oberen Halbschale gebildeten Vorstand beträgt etwa 50% seiner Materialstärke und somit mehrere Millimeter.

Dieses vorbekannte Verfahren eignet sich nicht zum Herstellen kleinerer als Kranausleger dimensionierter Trägerbauteile, wie diese etwa bei Fahrzeugen als Trägerbauteil, wie etwa als Holm oder als Hilfsrahmen eingesetzt werden. Überdies ist bei umlaufend geschlossenen Trägerbauteilen eine innenwandseitige Abstützung der beiden Halbschalen im Bereich des Stoßes nicht möglich.

WO 01/76930 A1 offenbart einen Lagerungskasten für die Lagerung einer Lenkwelle. Dieser Lagerungskasten ist aus zwei Halbschalen zusammengesetzt, deren längsseitige Stöße aneinander grenzen. Die Stoßflächen sind entweder deckungsgleich zueinander angeordnet oder zeigen eine Überdeckung von etwa 50 %. Verbunden werden die beiden Halbschalen aufgrund des außenseitigen Vorstandes der einen Halbschale gegenüber der anderen Halbschale durch Schweißen mittels einer Kehlnaht. Diese wird in die durch den Vorstand gebildete Kehle gesetzt, sodass auf diese Weise die diese Kehle einfassenden Seitenflächen stoffschlüssig miteinander verbunden werden.

US 2013/0337285 A1 offenbart ein aus zwei Halbschalen gebildetes Strukturelement für eine Fahrzeuganwendung. Die Materialstärke der beiden Halbschalen ist unterschiedlich. Die Außenseiten der stoßseitig aneinander grenzenden Schenkel sind bündig. Durch die unterschiedliche Materialstärke der einen Halbschale gegenüber der anderen wird ein innerer Vorstand gebildet.

EP 2 363 214 A1 offenbart ein Verfahren zur Herstellung eines geschweißten Hohlprofils sowie ein solches Hohlprofil. Dieses Hohlprofil ist aus einem ebenen Materialstreifen durch Kanten zunächst in die gewünschte Querschnittsgeometrie gebracht werden, und zwar dergestalt, dass die beiden Längskanten des Materialstreifens stumpf aneinander stoßen. Diese werden durch eine I-Schweißnaht miteinander verbunden.

Ausgehend von diesem diskutierten Stand der Technik liegt der Erfindung daher die Aufgabe zu Grunde, ein Verfahren zum Herstellen eines aus zwei im Querschnitt U-förmigen Halbschalen aufgebauten Trägerbauteils für eine Fahrzeuganwendung vorzuschlagen, dessen Schweißverbindung verbessert und somit das Trägerbauteil höheren Belastungen Stand hält.

Gelöst wird diese Aufgabe mit den Merkmalen des Anspruchs 1.

Bei dem im Rahmen dieser Ausführungen benutzten Begriff "Stoß" ist die Stirnseite der abgekanteten Schenkel einer Halbschale zu verstehen, an die der Stoß - die Stirnseite - der Seitenwände der anderen Halbschale grenzt.

Bei diesem Trägerbauteil sind die beiden Halbschalen stoßseitig miteinander gefügt, typischerweise verschweißt. Um die beiden Halbschalen an ihren beiden, einander gegenüberliegenden Stößen in derselben Stellung der zu fügenden Halbschalen miteinander zu verbinden, sind die Stöße der Halbschalen so aufeinander abgestimmt, dass der Stoß der einen Halbschale außenseitig gegenüber dem außenseitigen Abschluss des Stoßes der anderen Halbschale etwas vorsteht. Bei diesem Trägerbauteil ist zudem der Stoß einer der beiden Halbschalen innenseitig gegenüber dem innenseitigen Abschluss der anderen Halbschale vorstehend konzipiert. Der Vorstand der Stöße braucht nicht sonderlich groß zu sein. Bei dem Vorgang des Fügens weist der außenseitige Vorstand nach oben, sodass in einer Position geschweißt werden kann, in der die beiden Halbschalen sich in einer Übereinanderanordnung befinden, beispielsweise in der PC-Position oder PB-Position gefügt werden können, mithin auch in anderen Positionen, als dieses beim Stand der Technik möglich war. Überraschend hat sich gezeigt, dass zum Schweißen von zwei Stahlblechhalbschalen ein Vorstand von nur größer 0 mm, bevorzugt von größer gleich 0,1 mm ausreichend ist, um an der Außenseite der stoßseitig miteinander zu fügenden Halbschalen eine hinreichende Schweißnahtsicherung bereit zu stellen. Die aneinandergrenzenden und bezüglich der Stoßspannweite einander gegenüberliegenden Stöße können gleichzeitig gefügt werden. Der Vorstand wirkt als Fügebadstütze und verhindert ein Wegfließen des sich bei dem Prozess des Fügens ausbildenden flüssigen Fügematerials, beim Schweißen: des aufgeschmolzenen Materials. Insofern war es überraschend bei der Entwicklung dieses Konzeptes festzustellen, dass selbst ein Stoßvorstand von etwa nur 0,1 mm, also: ein mit bloßem Auge nicht oder so gut wie nicht wahrnehmbarer Stoßvorstand ausreicht, um die aneinandergrenzenden Stöße bestimmungsgemäß miteinander Fügen zu können. Somit können, wenn gewünscht, zwei bezüglich ihrer Stoßspannweite nur geringfügig unterschiedliche Halbschalen, ohne die zum Stand der Technik aufgezeigten Nachteile in Kauf nehmen zu müssen, stoßseitig miteinander gefügt werden. Da das Fügen der beiden Halbschalen in einem gemeinsamen Fügeschritt vorgenommen werden kann, ist ein Verdrehen des Bauteils ("Drall") in Erstreckungsrichtung der Schweißnaht so gering wie möglich. Aufgrund des innenseitigen Vorstandes waren bei einem auf diese Weise stoßgefügten Trägerbauteil zunächst schlechtere Schweißergebnisse zu erwarten. Überraschenderweise wurde jedoch genau das Gegenteil festgestellt. Aufgrund der beschriebenen Umstände waren die Schweißergebnisse trotz geringerer Überdeckung hinsichtlich ihrer Belastbarkeit vergleichbar mit auf Stoß geschweißten Halbschalen ohne Überstand. Bei der Untersuchung von Schweißproben führte dieses regelmäßig zu einem Versagen des Grundwerkstoffes, nicht jedoch der Schweißnaht.

Die vorbeschriebene Besonderheit, dass bereits ein Vorstand von etwa 0,1 mm, mitunter sogar etwas weniger ausreicht, um als Schweißbadsicherung zu dienen, wird an dem Umstand der Oberflächenspannung des Schweißbades ebenso festgemacht, wie daran, dass die beiden Halbschalen beim Fügen unter Belassung eines Kapillarspaltes mit ihren Stößen aneinandergrenzen. Aus diesem Grunde eignet sich dieses Trägerbauteil in besonderem Maße dazu aus Halbschalen auch geringer Wandstärke hergestellt zu werden. Aufgrund der vorbeschriebenen geringeren Stoßquerschnittsfläche kann der zum Schweißen benötigte Energieeintrag, um eine sich über den Stoß erstreckende Schweißnaht auszubildende, aufgrund der vorbeschriebenen Effekte geringer gehalten werden. Der außenseitige und der innenseitige Überstand werden abgebrannt bzw. gehen als Schweißzusatz in die Schweißschmelze auf. Die auf die Fügenaht einwirkende Kerbwirkung ist dadurch auf ein Minimum reduziert, weshalb sich derartige Trägerbauteile vor allem als Fahrwerksteile eignen. Vorzugsweise wird das Fügeverfahren dergestalt durchgeführt, dass die Stöße über die gesamte Kontaktbreite stoffschlüssig verbunden sind, sodass sich aufgrund des innenseitig Vorstandes auch an der Innenseite eine Schweißkehle ausbildet, an der der innenseitige Vorsprung als Schweißzusatz zur Verfügung steht. Dieses kann durch eine entsprechende Energiezufuhr bei dem beispielsweise eingesetzten MAG-Schweißen oder einem anderen Schweißverfahren, etwa Laser-Schweißen oder auch durch die Schweißgeschwindigkeit eingestellt werden. Von besonderem Vorteil ist, dass dieser Schweißvorgang einstufig durchgeführt werden kann, was sich günstig auf den Herstellprozess auswirkt. Die vorbeschriebenen besonderen Ergebnisse lassen sich selbst bei einer Innenwandabstützung realisieren, sollte dieses vorgesehen sein. Damit ist selbst bei einer innenseitigen Abstützung an der innenseitig vorstehenden Halbschale mit einem gewissen Abstand zu dem Stoß aufgrund des Vorstandes eine Entgasung zur Innenseite hin möglich. In Folge einer Entgasung zur Innenseite der Fügestelle hin und somit in Richtung der Einwirkung der auf die Fügestelle eingebrachten Schweißenergie erlaubt das außenseitige Ausbilden einer sehr sauberen Schweißnaht, ohne das zu befürchten wäre, das aufgeschmolzenes Material in nennenswertem Maße wegspritzt. Auch dieses begründet neben der Oberflächenspannung die Ausbildung einer außenseitigen Schweißnaht ohne zusätzliche Schweißbadsicherung bei einem Vorstand bzw. Überstand des Stoßes der unteren Halbschale von etwa 0,1 mm oder wenigen zehntel Millimetern mehr.

Ein weiterer Vorteil dieses Verfahrens ist, dass die Halbschalen neben einer insbesondere im Automobilbau benötigten äußerst geringen Wandstärke zudem auch eine gleiche Wandstärke aufweisen können und somit das daraus hergestellte Trägerbauteil gewichtsmäßig optimiert ist.

Insofern kann durch Ausnutzen dieses Konzeptes trotz außenseitigen Schweißens tatsächlich ein Durchschweißen erreicht werden. Die bevorzugte Ausbildung einer Schweißkehle auf der Innenseite verstärkt die Schweißnaht im besonderen Maße, da einer Kerbwirkung an dieser Stelle wirksam entgegengewirkt ist.

Durch die Gewährleistung einer Entgasung nach innen hin bei dem Vorgang des Schmelzfügens kann ein solches Trägerbauteil sowohl aus beschichteten als auch unbeschichteten Halbschalen hergestellt werden. Vor allem bei einem Schmelzfügen von beschichteten Halbschalen wirkt sich das vorgesehene Innenentgasen besonders vorteilhaft aus, da dieses den Prozess des Durchschweißens unterstützt.

Vorteilhaft bei diesem Konzept ist, dass es zum Erzielen der vorbeschriebenen Vorteile unerheblich ist, ob der innenseitige Überstand durch den Stoß der unteren Halbschale oder denjenigen der oberen Halbschale bereitgestellt ist.

Bei der Auslegung eines solchen Trägerbauteils sind die an dieses gestellten Anwendungsanforderungen zu berücksichtigen. Dieses betrifft auch die notwendige Festigkeit der aneinandergrenzenden Stöße der beiden Halbschalen, weshalb eine gewisse Mindestüberdeckung gegeben sein muss. Die Stoßüberdeckung sollte daher nicht kleiner als 50 % der Wandstärke sein. Werden unterschiedliche Wandstärken eingesetzt, so sollte in Bezug auf die Halbschale mit der stoßseitig dünneren Wandstärke dieser Wert nicht unterschritten werden. Typischerweise werden derartige Trägerbauteile aus Stahlblech mit Wandstärken größer gleich 2,0 mm hergestellt, um etwaigen Korrosionsproblemen vorbeugen zu können. Unter Berücksichtigung des nur geringen benötigten Stoßvorstandes größer 0,0 mm, bevorzugt von 0,1 mm, ist, erfindungsgemäß, bei derartigen Halbschalen mit gleicher Wandstärke im Bereich ihrer Stöße eine Überdeckung sogar von mehr als 90 % möglich. So ergibt sich ein unter Berücksichtigung von Fertigungstoleranzen einzuhaltendes Feld, mit einer Mindestüberdeckung von 50 % und einem minimalen Vorstand größer 0,0 mm, beispielsweise von 0.1 mm, welches mit herkömmlichen Fertigungstechnologien eingehalten werden kann.

Der Stoßvorstand der einen Halbschale gegenüber der anderen Halbschale lässt sich auf unterschiedliche Weise ausbilden. So ist es beispielsweise möglich, zwei mit gleicher Wandstärke gefertigte Halbschalen bezüglich ihrer Stoßspannweite so auszulegen, dass die Stoßspannweite der einen Halbschale um den doppelten Vorstand größer ist als diejenige der anderen Halbschale. Unter Berücksichtigung eines nur geringen notwendigen Vorstandes ist bei einer solchen Ausgestaltung die Breite der Halbschalen nur geringfügig unterschiedlich. Auch besteht die Möglichkeit, zwei Halbschalen unterschiedlicher Wandstärke miteinander zu verbinden, wobei die Halbschale mit der dickeren Wandstärke typischerweise zugleich die Stoßvorstände bereitstellt. Möglich ist es auch, zwei Halbschalen von grundsätzlich gleicher Wandstärke miteinander zu verbinden, wobei bei der einen Halbschale der die Stöße tragende Endabschnitt zum Stoß hin etwas verdickt ist, und zwar um den vorgesehenen Stoßvorstand.

Nachfolgend ist die Erfindung anhand eines Ausführungsbeispiels unter Bezugnahme auf die beigefügten Figuren beschrieben. Es zeigen:
- **Fig. 1:**: Einen schematisierten Querschnitt durch ein Trägerbauteil gemäß einer ersten Ausgestaltung,
- **Fig. 2:**: einen schematisierten Querschnitt durch ein Trägerbauteil gemäß einer weiteren Ausgestaltung,
- **Fig. 3:**: einen schematisierten Querschnitt durch ein Trägerbauteil gemäß noch einer weiteren Ausgestaltung und
- **Fig. 4:**: eine schematisierte perspektivische Ansicht des Trägerbauteils der Figur 2 bei dem Prozess des Fügens seiner beiden Halbschalen.

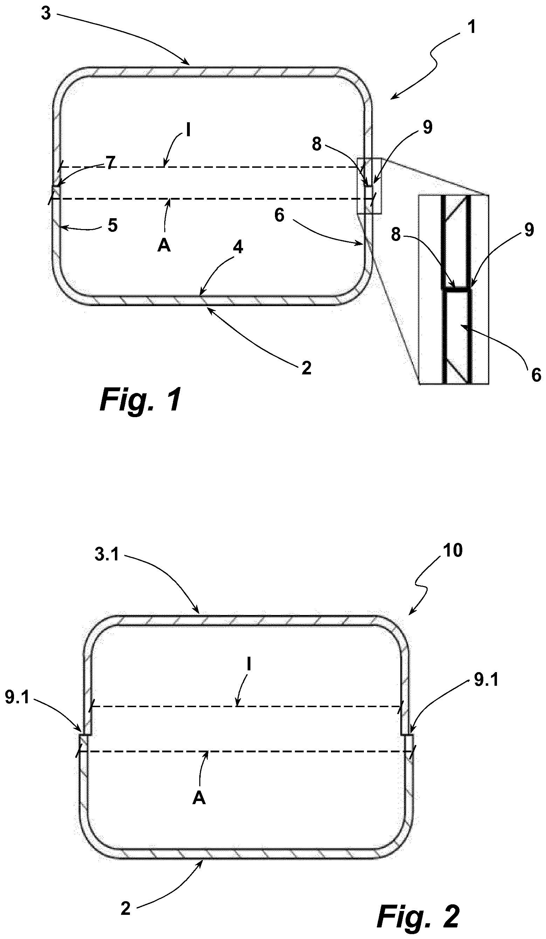

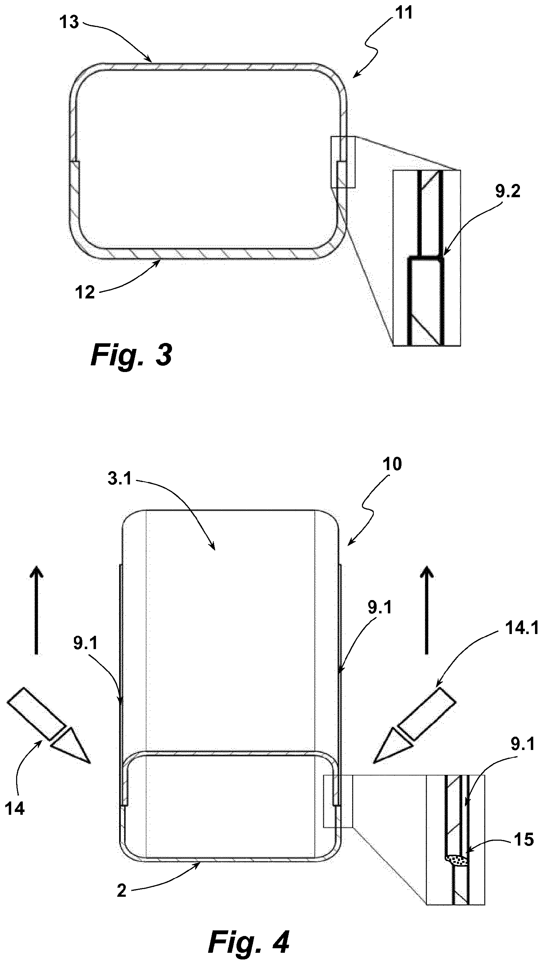

Ein Trägerbauteil 1 für eine Fahrzeuganwendung ist aus zwei Halbschalen 2, 3 hergestellt. Die beiden Halbschalen 2, 3 weisen eine U-förmige Querschnittsgeometrie auf und umfassen jeweils einen Gurt 4 (nur zu der Halbschale 4 kenntlich gemacht), an den zwei Schenkel 5, 6 angeformt sind. Die Schenkel 5, 6 sind gegenüber dem Gurt 4 abgekantet und verlaufen parallel zueinander. Die Materialstärke der Halbschale 2 beträgt bei dem dargestellten Ausführungsbeispiel 2 mm. Die Endflächen der Schenkel 5, 6 bilden jeweils einen Stoß 7, 8. Die Halbschale 3 ist ebenso aufgebaut wie die Halbschale 2 und ist in der in Figur 1 gezeigten Anordnung mit ihren Stößen auf die Stöße 7, 8 der Halbschale 2 aufgesetzt. Die beiden Halbschalen 2, 3 unterscheiden sich durch ihren Außenwandabstand A zwischen den aneinandergrenzend gehaltenen Stößen. Der Außenwandabstand A der Halbschale 2 - die Stoßspannweite - ist um wenige zehntel Millimeter größer als die Stoßspannweite der Halbschale 3. Die diesbezüglich größere Auslegung der Halbschale 2 ist in der zu Figur 1 gezeigten Ausschnittsvergrö-ßerung erkennbar. Auf Grund dieser Auslegung steht der Stoß 8 der Halbschale 2 außenseitig bezüglich des komplementären Stoßes der Halbschale 3 etwas vor. Dieser Vorstand 9 beträgt bei dem dargestellten Ausführungsbeispiel 0,15 mm auf jeder Seite, denkbar ist aber auch eine bevorzugte Ausführungsform mit 0,5 mm. Die durch den Vorstand 9 gebildete Fläche dient bei einem Schweißprozess zum Verbinden der beiden Halbschalen 2, 3 miteinander als Schweißbadstütze. Der Schweißprozess selbst ist weiter unten mit Bezug auf Figur 4 beschrieben.

Bei dem Trägerbauteil 1 unterscheidet sich auch der Innenwandabstand I der beiden Halbschalen 2, 3 voneinander. Der Innenwandabstand I ist in Figur 1 an der oberen Halbschale 3 kenntlich gemacht. Der Vorstand des Stoßes 7 der Halbschale 3 gegenüber dem Stoß der Halbschale 2 entspricht, wie aus der Ausschnittsvergrößerung erkennbar, dem Maß des Vorstandes 9 und somit ebenfalls etwa 0,15 mm.

Figur 2 zeigt ein weiteres Trägerbauteil 10, welches ebenso aufgebaut ist wie das Trägerbauteil 1 der Figur 1. Das Trägerbauteil 10 unterscheidet sich von dem Trägerbauteil 1 dadurch, dass die Stoßspannweite der Halbschale 3.1 gegenüber derjenigen bzw. dem Außenwandabstand A der Halbschale 2 erkennbar geringer ist. Die Folge ist, dass der Vorstand 9.1 bei diesem Trägerbauteil 10 größer ist als bei dem Trägerbauteil 1. Auch bei dem Trägerbauteil 10 ist durch den Stoß der oberen Halbschale 3.1 ein innenseitiger Vorstand gegenüber der Innenwand der unteren Halbschale 2 gebildet.

Da bei den Trägerbauteilen 1, 10 die Wandstärke der Halbschalen 2, 3, 3.1 gleich ist, unterscheiden sich die Trägerbauteile 1 und 10 hinsichtlich des Grades der Überdeckung der aneinandergrenzenden Stöße der Halbschalen. Wird bei dem Träger 1 eine Überdeckung von 92,5 % erreicht, so sind es bei dem Träger 10 lediglich die mindestens geforderten 50 %.

Figur 3 zeigt noch ein weiteres Trägerbauteil 11. Die untere Halbschale 12 des Trägerbauteils 11 weist eine größere Wandstärke auf als die obere Halbschale 13. Die größere Wandstärke wird bei diesem Ausführungsbeispiel genutzt, um damit auch den gewünschten Vorstand 9.2 auszubilden, der auch bei diesem Ausführungsbeispiel sehr gering gehalten ist und ebenfalls nur etwa 0,15 mm beträgt. Aufgrund der größeren Materialstärke der unteren Halbschale 12 des Trägerbauteils 11 dieser Ausgestaltung ist auch der innere Vorstand durch den Stoß der unteren Halbschale 12 bereitgestellt.

Die Trägerbauteile 1, 10, 11 sind in den Figuren mit den mit ihren Stößen aneinandergrenzenden Halbschalen gezeigt, bevor die Halbschalen miteinander verschweißt sind. Zum Schmelzverschweißen der beiden Halbschalen 1, 2; 2, 3.1; 12, 13 der Trägerbauteile 1, 10, 11 werden diese zueinander so positioniert, dass der jeweilige Vorstand 9, 9.1, 9.2 an den Längsseiten eingerichtet ist. Diese Positionierung ist in den Figuren 1 bis 3 bezüglich der Trägerbauteile 1, 10, 11 dargestellt. Dabei ist vorgesehen, dass der jeweilige Vorstand 9, 9.1, 9.2 auch unter Berücksichtigung eines unterschiedlichen Verzuges der aneinandergrenzend gehaltenen Stöße bei dem Vorgang des Schweißens stets größer 0,0 mm beträgt. Eine Änderung in der Weite des Vorstandes 9, 9.1, 9.2 kann durch die Erwärmung während des Fügens erfolgen.

Aufgrund der unvermeidbaren Unebenheiten der aneinandergrenzenden Stöße der Halbschalen 2, 3.1 befindet sich zwischen den Stößen ein Spalt, der beim Schweißvorgang einer Entgasung dienlich ist.

Nach dem Positionieren der beiden Halbschalen, wobei nachfolgend unter Bezugnahme auf Figur 4 auf das Trägerbauteil 10 der Figur 2 abgehoben wird und somit nach Positionieren der Halbschale 2 und 3.1 in ihre bestimmungsgemäße Fügeanordnung unter Bereitstellung der der Längserstreckung des Trägerbauteils 10 folgenden Vorstände 9.1 werden entlang dieser die beiden Halbschalen 2, 3.1 gefügt, und zwar bei dem dargestellten Ausführungsbeispiel durch ein MAG-Schweißen. Die Schweißapparate sind in Figur 4 mit den Bezugszeichen 14, 14.1 schematisiert kenntlich gemacht. Die Schweißrichtung ist in Figur 4 durch die Pfeile angegeben. Der Schweißvorgang auf den beiden Stoßseiten wird gleichzeitig durchgeführt, wobei dies sowohl in gleicher, als auch in gegensinniger Richtung zueinander ausgeführt werden kann. Dieses erlaubt ein einschrittiges und damit gleichzeitiges Fügen der beiden Halbschalen 2, 3.1 miteinander. Dadurch ist ein wärmebedingter Verzug sowie ein dadurch bedingtes Verdrehen so gering wie möglich gehalten. In der Ausschnittsvergrößerung der Figur 4 ist die erzeugte Schweißnaht mit dem Bezugszeichen 15 kenntlich gemacht. Vorstellbar sind an dieser Stelle aber auch andere Schweißverfahren, wie WIG, Plasma, Laser oder Laserhybridschweißen. Erkennbar ist, dass sich aufgeschmolzenes Material zur Ausbildung einer innenseitigen Schweißkehle bis an den innenseitigen Vorstand erstreckt, der zur Ausbildung dieser Schweißkehle als Schweißzusatz zur Verfügung steht. Das Ausbilden einer Schweißkehle an der Innenseite wirkt einer Kerbwirkung entgegen, was die besonderen Festigkeitseigenschaften des Trägerbauteils 10 begründet. Dennoch kann trotz der geringen Menge aufgeschmolzenen Materials die vorbeschriebene Schweißnaht ausgebildet werden. Obwohl nur von außen geschweißt, sind die Stöße durchgeschweißt miteinander verbunden. Das vorbeschriebene Entgasen beim Fügen in das Innere des Trägerbauteils, wodurch die außenseitige Schweißnaht nicht beeinträchtigt wird, erlaubt ein Verschweißen der Halbschalen ohne ein vorheriges Waschen oder Beizen, was herkömmlich vorgenommen wird, um eine Rissbildung vorzubeugen.

Bei Trägerbauteilen, die wie das Trägerbauteil 10 als Holm und somit langgestreckt sind, kann der Schweißvorgang sehr rasch durchgeführt werden, da vorzugsweise beide Seiten gleichzeitig geschweißt werden können, was der bisherige Stand der Technik bei gezeigter Stoßart nicht zuließ. So lassen sich herkömmliche Schweißeschwindigkeiten, die beim MAG-Schweißen in der Regel zwischen 0,5 m/min und 1,5 m/min betragen, durch den gleichzeitigen Einsatz eines zweiten Schweißbrenners theoretisch verdoppeln. Durch die schnelle Abkühlung des Schweißbades während des Schweißprozesses, können auch geringe Schweißbadstützen im bereits erwähnten Umfang von größer 0,0 mm als völlig ausreichend betrachtet werden. Dies vor allem auch vor dem Hintergrund, dass die jeweils flüssige Schweißbadmenge nur gering ist.

Für den Fachmann ergeben sich zahlreiche Möglichkeiten, die Erfindung im Umfange der geltenden Ansprüche umzusetzen, ohne dass dieses im Rahmen dieser Ausführungen näher ausgeführt werden müsste.

### Bezugszeichenliste

- 1: Trägerbauteil
- 2: Halbschale
- 3, 3.1: Halbschale
- 4: Gurt
- 5: Schenkel
- 6: Schenkel
- 7: Stoß
- 8: Stoß
- 9, 9.1, 9.2: Vorstand
- 10: Trägerbauteil
- 11: Trägerbauteil
- 12: Halbschale
- 13: Halbschale
- 14, 14.1: Schweißapparat
- 15: Schweißnaht
- A: Außenwandabstand/Stoßspannweite
- I: Innenwandabstand

## Patentansprüche

1. Verfahren zum Herstellen eines aus zwei im Querschnitt U-förmigen Halbschalen (2, 3; 2, 3.1; 12, 13) aufgebauten Trägerbauteils (1, 10, 11) für eine Fahrzeuganwendung mit folgenden Schritten:
- Breitstellen von zwei stoßseitig aneinandergrenzenden Halbschalen (2, 3; 2, 3.1; 12, 13) mit unterschiedlicher Stoßspannweite (A),
- Anordnen und Halten der Halbschalen (2, 3; 2, 3.1; 12, 13) mit ihren Stößen (7, 8) aneinandergrenzend unter Belassung eines Kapillarspaltes, dergestalt, dass die Stöße (8) einer der beiden Halbschalen (2, 12) außenseitig bezüglich des Stoßes (7) der anderen Halbschale (3, 3.1, 13) vorstehen und dieser Vorstand (9, 9.1, 9.2) nach oben weisend gerichtet ist und die Stöße (7) der anderen Halbschale (3, 3.1, 13) innenseitig bezüglich der Stöße (8) der ersten Halbschale (2, 12) vorstehen und dieser Vorstand nach unten weisend gerichtet ist,
**dadurch gekennzeichnet,**
- **dass** die beiden Halbschalen (2, 3; 2, 3.1; 12, 13) so zueinander angeordnet werden, dass die Überdeckung der aneinandergrenzenden Stöße (7, 8) der beiden Halbschalen (2, 3; 2, 3.1; 12, 13) mehr als 90 % in Bezug auf die Stoßbreite beträgt, wobei bei Vorhandensein von Stößen (7, 8) mit unterschiedlicher Stoßbreite diese Überdeckung sich auf die geringere Stoßbreite bezieht, und anschließend
- gleichzeitiges Schmelzfügen zum Erreichen eines Durchschweißens der aneinandergrenzend gehaltenen Stöße (7, 8) der einander gegenüberliegenden Wandabschnitte von au-ßen, zum Ausbilden einer sich über die Stoßüberlappung erstreckenden Schweißnaht,
- und **dass** das Schmelzfügen derart durchgeführt wird, dass der innenseitige Vorstand als Schweißzusatz genutzt und unter Ausbildung einer Schweißkehle in die Schweißnaht integriert wird

2. Verfahren nach Anspruch 1, **dadurch gekennzeichnet, dass** das Fügen als MAG-, WIG, Plasma-, Laser- oder Laserhybridschweißen durchgeführt wird.

3. Verfahren nach Anspruch 1 oder 2, **dadurch gekennzeichnet, dass** die Halbschalen (2, 3, 3.1, 12, 13) beschichtet sind.

4. Verfahren nach einem der Ansprüche 1 bis 3, **dadurch gekennzeichnet, dass** das mit dem Verfahren hergestellte Trägerbauteil (1, 10, 11) ein Holm, ein Hilfsrahmen oder ein Bestandteil eines Hilfsrahmens ist.

5. Verfahren nach einem der Ansprüche 1 bis 4, **dadurch gekennzeichnet, dass** jede Halbschale (2, 3, 3.1, 12, 13) ein umgeformtes Stahlblech- oder Aluminiumblechbauteil ist.

## Claims

1. Method for producing a carrier component (1, 10, 11) for a vehicle application, comprising two half-shells (2, 3; 2, 3.1; 12, 13) that are U-shaped in cross-section, with the following steps:
- Providing two half-shells (2, 3; 2, 3.1; 12, 13) adjacent to one another on contact sides, with different contact widths (A),
- arranging and holding of the half-shells (2, 3; 2, 3.1; 12, 13) with their contact sides (7, 8) being adjacent while leaving a capillary gap, in such a way that the contact surfaces (8) of one of the two half-shells (2, 12) protrude outwards in relation to the contact surface (7) of the other half-shell (3, 3.1, 13), and this protrusion (9, 9.1, 9.2) is aligned pointing upwards, and the contact surfaces (7) of the other half-shell (3, 3.1, 13) protrude inwards in relation to the contact surface (8) of the first half-shell (2, 12), and this protrusion is aligned pointing downwards, **characterised in that**
- the two half-shells (2, 3; 2, 3.1; 12, 13) are arranged in relation to one another in such a way that the overlap of the adjacent contact surfaces (7, 8) of the two half-shells (2, 3; 2, 3.1; 12, 13) amounts to more than 90% in relation to the width, wherein, in the presence of contact surfaces (7, 8) with different contact widths, this overlap relates to the lesser width, and then
- simultaneous fusion welding from the outside, in order to achieve through-welding of the contact surfaces (7, 8), being held adjacent, of the opposing wall sections in order to form a weld seam extending over the joint overlap,
and that
- the fusion welding is carried out in such a way that the inside protrusion is used as a flux addition, and is integrated into the weld seam with the formation of a weld fillet.

2. Method according to claim 1, **characterised in that** the joining is carried out as MAG, TIG, plasma, laser, or laser-hybrid welding.

3. Method according to claim 1 or 2, **characterised in that** the half-shells (2, 3, 3.1, 12, 13) are coated.

4. Method according to any one of claims 1 to 3, **characterised in that** the carrier component (1, 10, 11) produced with the method is a spar, an auxiliary frame, or a component of an auxiliary frame.

5. Method according to any one of claims 1 to 4, **characterised in that** each half-shell (2, 3, 3.1, 12, 13) is a shaped component made of sheet steel or aluminium sheet.

## Revendications

1. Procédé servant à fabriquer un composant porteur (1, 10, 11) assemblé à partir de deux demi-coques (2, 3 ; 2, 3.1 ; 12, 13) avec une section en forme de U, destiné à une application automobile, selon les étapes suivantes :
- Mise à disposition de deux demi-coques (2, 3 ; 2, 3.1 ; 12, 13) contigües côté aboutement avec une portée d'aboutement (A) différente,
- Disposition et maintien des demi-coques (2, 3 ; 2, 3.1 ; 12, 13) avec leurs aboutements (7, 8) contigus en laissant une fente capillaire, de telle sorte que les aboutements (8) de l'une des deux demi-coques (2, 12) sont proéminents sur la face extérieure par rapport à l'aboutement (7) de l'autre demi-coque (3, 3.1, 13) et que cette proéminence (9, 9.1, 9.2) est orientée vers le haut et que les aboutements (7) de l'autre demi-coque (3, 3.1, 13) sont proéminents sur la face intérieure par rapport aux aboutements (8) de la première demi-coque (2, 12) et que cette proéminence est orientée vers le bas, **caractérisé en ce que** les deux demi-coques (2, 3 ; 2, 3.1 ; 12, 13) sont disposées l'une par rapport à l'autre de telle sorte que le recouvrement des aboutements (7, 8) contigus des deux demi-coques (2, 3 ; 2, 3.1 ; 12, 13) s'élève à plus de 90% par rapport à la largueur d'aboutement, en présence d'aboutements (7, 8) avec une largeur d'aboutement différente, ce recouvrement se rapportant à la plus petite largeur d'aboutement et qu'est réalisé ensuite
- simultanément un jointage par fusion afin d'obtenir une soudure continue par l'extérieur des aboutements (7, 8) maintenus de manière contigüe des tronçons de paroi se faisant face, dans le but de réaliser un cordon de soudure s'étendant sur le recouvrement d'aboutement
- et **en ce que** le jointage par fusion est réalisé de telle sorte que la proéminence sur la face intérieure est utilisée comme un consommable de soudage et est intégrée au cordon de soudure en formant une gorge de soudure.

2. Procédé selon la revendication 1, **caractérisé en ce que** les joints sont réalisés par une soudure MAG, TIG, plasma, laser ou laser hybride.

3. Procédé selon la revendication 1 ou 2, **caractérisé en ce que** les demi-coques (2, 3, 3.1, 12, 13) sont munies d'un revêtement.

4. Procédé selon l'une des revendications 1 à 3, **caractérisé en ce que** le composant porteur (1, 10, 11) fabriqué lors de ce procédé est un longeron, un faux-châssis ou un composant du faux-châssis.

5. Procédé selon l'une des revendications 1 à 4, **caractérisé en ce que** chaque demi-coque (2, 3, 3.1, 12, 13) est une pièce moulée en tôle d'acier ou en tôle d'aluminium.
